(19) Europäisches Patentamt
European Patent Office
Office européen des brevets

(11) EP 3 737 726 B1

(12) EUROPEAN PATENT SPECIFICATION

(45) Date of publication and mention of the grant of the patent:
**06.12.2023 Bulletin 2023/49**

(21) Application number: **19700181.1**

(22) Date of filing: **10.01.2019**

(51) International Patent Classification (IPC):
***C09J 175/06*** (2006.01) ***C09J 175/08*** (2006.01)
***C08G 18/48*** (2006.01) ***C08G 18/76*** (2006.01)
***C08G 18/10*** (2006.01) ***C08G 18/22*** (2006.01)
***C08G 18/28*** (2006.01) ***C08G 18/42*** (2006.01)
***C08G 18/78*** (2006.01)

(52) Cooperative Patent Classification (CPC):
**C09J 175/06; C08G 18/10; C08G 18/222; C08G 18/283; C08G 18/42; C08G 18/485; C08G 18/7671; C08G 18/7837; C09J 175/08;** C08G 2170/20

(86) International application number:
**PCT/EP2019/050498**

(87) International publication number:
**WO 2019/137978 (18.07.2019 Gazette 2019/29)**

(54) **POLYURETHANE COMPRISING FORMULATIONS WITH ISOCYANATE FUNCTIONALITY**
POLYURETHAN MIT FORMULIERUNGEN MIT ISOCYANATFUNKTIONALITÄT
POLYURÉTHANE COMPRENANT DES FORMULATIONS À FONCTIONNALITÉ ISOCYANATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2018 EP 18151001**

(43) Date of publication of application:
**18.11.2020 Bulletin 2020/47**

(73) Proprietor: **Huntsman International LLC**
**The Woodlands, TX 77380 (US)**

(72) Inventors:
- **HOLVOET, Servaas**
  **3020 Veltem-Beisem (BE)**
- **RITS, Andreas**
  **3140 Keerbergen (BE)**
- **MANGELSCHOTS, Nicole**
  **3012 Wilsele (BE)**
- **BEYENS, Machteld**
  **3078 Everberg (BE)**

(74) Representative: **Weidner Stern Jeschke Patentanwälte Partnerschaft mbB**
**Universitätsallee 17**
**28359 Bremen (DE)**

(56) References cited:
**EP-A1- 1 086 969**
**US-A1- 2011 263 797**
**US-B1- 6 410 095**
**US-B1- 6 426 414**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 737 726 B1

## Description

### FIELD OF INVENTION

The present invention is related to a method to prepare a reactive polyisocyanate composition, an allophanate based polyisocyanate intermediate prepolymer suitable for making such reactive polyisocyanate composition and uses of such reactive polyisocyanate composition.

### BACKGROUND

Residual monomer contents in polyisocyanates and polyurethane systems can be disadvantageous for different reasons. Some systems are processed at elevated temperatures (e.g. hot melt adhesives at 100-170°C), a temperature range at which monomeric di-isocyanates have a considerable vapour pressure.

Furthermore, PU systems comprising 1% or more free MDI are classified and labelled since December 1st,2010 either according to the DSD (dangerous Substances Directive from the European Union) with R40 (wherein R40 is labelled as limited evidence of a carcinogenic effect) or according to the CLP (Classification, Labelling and Packaging regulation from the European Union) with H351. The implications of the reclassification affect the consumer use in Germany, France, Austria etc. since they impose consumer access control to products containing substances classified H351 (e.g. training shop staff, locked cupboards, log book of recipient, etc.). This reclassification applies to di-isocyanate species or preparations / mixtures containing more than 1% of monomeric di-isocyanates. Many PU systems contain high concentrations of the MDI monomer (e.g. OCF cans), and are thus classified as potentially carcinogenic.

In addition, the German Federal Institute for Occupational Safety and Health (BAuA) is recently proposing a risk-based measure under the REACH regulation for the industrial and professional use of di-isocyanates. The proposal prohibits the sale and use of all di-isocyanates-based products that contain > 0.1% by weight di-isocyanate (unless it can be demonstrated that a product/use combination leads to acceptable residual dermal and inhalation exposure only or unless workers and management received training in combination with workplace technical & organisational measures).

A possible way to reduce the amount of monomer (di-isocyanate) concentration is to strip off the volatile isocyanate monomers from the prepolymer systems using a distillation technique (e.g. thin film evaporator). This is disclosed in EP0316738 and US5441808. Stripping requires however an extra unit operation and therefore adds capital costs and operation costs to the production of the prepolymers. Additionally, the viscosity of the resulting polymeric will be so high it cannot be handled without heating.

EP 1 086 969 A1 discloses polyisocyanates which are obtained by reacting at least one diisocyanate selected from the group consisting of an aliphatic diisocyanate and an alicyclic diisocyanate with a polyol having a number average molecular weight of from 3,000 to 30,000 and an average number of hydroxyl groups of from 1 to 3 and which contains allophanate linkages and urethane linkages in a specific ratio.

US 6 426 414 B1 relates to water-dispersible polyisocyanate mixtures prepared from aliphatic, cycloaliphatic, araliphatic and/or aromatic diisocyanates and having a specific average isocyanate functionality, a specific content of isocyanate groups, and a specific content of ethylene oxide units incorporated within polyether chains containing an average of 5 to 35 ethylene oxide units, wherein at least 60 mol% of the polyether chains are connected via allophanate groups to two polyisocyanate molecules which are each prepared from at least two diisocyanate molecules.

US 6 410 095 B1 discloses substantially solvent-free binder compositions containing a polyisocyanate component containing heteroallophanate groups and having aromatically-bound isocyanate groups, and an isocyanate-reactive component.

US 2011/0263797 A1 relates to allophanate-modified diphenylmethane diisocyanates, prepolymers thereof and two-component polyureas or one-component polyureaurethanes prepared from these prepolymers.

Another possibility for reducing the monomer content involves preparing prepolymers using the selective reactivity of asymmetric di-isocyanates (WO0300652A1).

Another possibility is by viscosity control through use of (mixtures) of monools/diols/triols (US20060079661A1, US5880167A1).

Other routes to low monomer systems include for example lowering the NCO/OH ratio during prepolymer synthesis such that lower monomer containing prepolymers are obtained. Reducing the NCO/OH ratio is however impracticable as the average Mw increases exponentially, and the resulting PU compositions would have extremely high viscosities and could no longer be applied.

One other effective way of eliminating the monomer is the use of hybrids in which the isocyanates are fully tipped (end capped) with an alternative functionality. This approach enables to make isocyanate free (and so monomer free) materials e.g. tipping with alkoxysilanes (EP1245601A1) or e.g. tipping with acrylates (EP1247825A1). Complete tipping of isocyanates with tipping agents might also lead to very high viscosities (> 150 Pas which make them not

suitable for several PU applications) and high cost.

Still another approach is the use of blocked isocyanates. The isocyanate is (fully) converted into a blocked analogue (e.g. oximes, phenolics etc.) and the blocking agent is removed during cure, generating the isocyanate in situ. A special case of blocked isocyanates is dimerized MDI. Disadvantages of blocked isocyanates is the need for deblocking temperatures (can easily exceed 100-150°C), the broad temperature range for complete deblocking and the release of the blocking agent which thereafter can yield EHS (VOC emission) issues.

Another approach is the chemical fixing of the monomeric isocyanate by partial trimerization of the isocyanate (Frisch et al, Advance in Urethane Science and Techn., vol. 1-7, 1971-1979). Partial trimerization however requires the use of viscosity reducing agents (solvents, plasticizers etc.).

Solvent extractions are used as well to extract some of the monomer from the prepolymer system.

Despite the many approaches to lower the monomer concentration in polyurethane comprising prepolymers, there is still need for further improvement and a further need to further develop ways to achieve low monomeric systems.

## SUMMARY OF THE INVENTION

According to a first aspect of the invention, a method to prepare a reactive polyisocyanate composition is disclosed which contains not more than 1 wt% of monomeric starting di-isocyanate based on the total weight of said polyisocyanate composition, having an NCO value in the range 0.1-15%, and wherein said composition comprises urethane groups and allophanate groups and wherein the ratio of allophanate groups over urethane groups is between 0.05 and 100.

According to embodiments, the amount of monomeric starting di-isocyanate molecules in the reactive polyisocyanate composition is preferably below 0.5 wt%, most preferably below 0.1 wt% based on the total weight of said polyisocyanate composition.

According to embodiments, the NCO value of the reactive polyisocyanate composition is in the range 0.8-2%, preferably in the range 1-2%, most preferably the NCO value is around 1%.

According to embodiments, the ratio allophanate groups over urethane groups in the reactive polyisocyanate composition is larger than 0.1, preferably larger than 1.

According to the invention, the method to prepare the reactive polyisocyanate composition according to the first aspect of the invention comprises mixing at least following compounds:

- An allophanate based polyisocyanate intermediate prepolymer containing ≥ 5 wt% and ≤ 20 wt% of monomeric di-isocyanate compounds based on the total weight of said prepolymer and having an NCO value in the range 5-15%, and
- An isocyanate reactive composition containing isocyanate reactive compounds having a functionality between 1 and 10 and a molecular weight in the range 100-10000, and

Wherein the allophanate based polyisocyanate intermediate prepolymer is the reaction product of at least one polyisocyanate compound and an isocyanate reactive compound selected from a monool having a molecular weight in the range 32-2000 g/mol, preferably 36-2000 g/mol, and wherein the ratio of allophanate groups over the urethane groups is higher than 0.05.

As explained above, the amount of monomeric starting di-isocyanate molecules in the final reactive polyisocyanate composition is not more than 1 wt%, based on the total weight of said polyisocyanate composition.

According to embodiments, the allophanate based polyisocyanate intermediate prepolymer contains ≥ 8 wt% and ≤ 15 wt% monomeric starting di-isocyanate compounds based on the total weight of said prepolymer.

According to embodiments, the ratio of allophanate groups over the urethane groups in the allophanate based polyisocyanate intermediate prepolymer is in the range 1-100.

According to embodiments, the allophanate based polyisocyanate intermediate prepolymer has an NCO value in the range 8-12%.

According to embodiments, the monools are selected from polyoxyalkylene polyether monools, polyester monools and modified castor oil monools, having an average molecular weight of 32-1000 g/mol, preferably 100-1000 g/mol, more preferably 250-750 g/mol. Using monools with low molecular weight (32-1000 g/mol, preferably 250-750 g/mol) is advantageous and enables forming an intermediate prepolymer that, when further reacted with isocyanate reactive composition having a molecular weight in the range 100-10000, will contribute to reach a low amount of monomeric starting di-isocyanate molecules in the final composition (below 0.5 wt%, based on the total weight of the final composition).

According to embodiments, the polyisocyanate compounds used to make the polyisocyanate intermediate prepolymer are selected from diphenylmethane diisocyanate (MDI) based polyisocyanates having < 40 wt% 2,4 MDI calculated on the total weight of the organic polyisocyanate mixture.

According to embodiments, the isocyanate reactive compounds used to react with the allophanate intermediate prepolymer is having a functionality between 1.8 and 10, preferably between preferably 2 to 4.

According to embodiments, the isocyanate reactive compounds used to react with the allophanate intermediate prepolymer are selected from the group comprising polyethers, polyesters, acrylic polyols, castor oil and modified castor oils, polybutadiene, polyolefin, preferably selected from polyester polyols.

According to a second aspect of the invention, an allophanate based polyisocyanate intermediate prepolymer according to claim 8 is disclosed.

According to a third aspect of the invention, the use of the reactive polyisocyanate composition prepared according to the first aspect of the invention is disclosed for making sealants, coatings, adhesives, elastomers.

The independent and dependent claims set out particular and preferred features of the invention. Features from the dependent claims may be combined with features of the independent or other dependent claims as appropriate.

The above and other characteristics, features and advantages of the present invention will become apparent from the following detailed description.

DEFINITIONS AND TERMS

In the context of the present invention the following terms have the following meaning:

1) **"isocyanate index"** or NCO index or index:
the ratio of NCO-groups over isocyanate-reactive hydrogen atoms present in a formulation, given as a percentage:

$$\frac{[NCO] \times 100}{[\text{active hydrogen}]} \quad (\%).$$

In other words, the NCO-index expresses the percentage of isocyanate actually used in a formulation with respect to the amount of isocyanate theoretically required for reacting with the amount of isocyanate-reactive hydrogen used in a formulation.

It should be observed that the isocyanate index as used herein is considered from the point of view of the actual polymerisation process preparing the material involving the isocyanate ingredient and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols or polyamines) are not taken into account in the calculation of the isocyanate index. Only the free isocyanate groups and the free isocyanate-reactive hydrogens (including those of water, if used) present at the actual polymerisation stage are taken into account.

2) The expression **"isocyanate-reactive compounds"** and "isocyanate-reactive hydrogen atoms" as used herein for the purpose of calculating the isocyanate index refers to the total of active hydrogen atoms in hydroxyl and amine groups present in the isocyanate reactive compounds; this means that for the purpose of calculating the isocyanate index at the actual polymerisation process one hydroxyl group is considered to comprise one reactive hydrogen, one primary amine group is considered to comprise one reactive hydrogen and one water molecule is considered to comprise two active hydrogens.

3) The term **"average nominal hydroxyl functionality"** (or in short "functionality") is used herein to indicate the number average functionality (number of hydroxyl groups per molecule) of the polyol or polyol composition on the assumption that this is the number average functionality (number of active hydrogen atoms per molecule) of the initiator(s) used in their preparation although in practice it will often be somewhat less because of some terminal unsaturation.

4) The word **"average"** refers to number average unless indicated otherwise.

5) A **"urethane group-containing polyisocyanate composition"** refers to a composition wherein the polyisocyanate is partly reacted with isocyanate reactive compounds to achieve urethane groups (often also referred to as a polyisocyanate prepolymer).

6) A **"urethane group-containing reactive polyisocyanate composition according to the invention"** refers to a urethane group-containing polyisocyanate composition (prepolymer) which comprises beside urethane groups also allophanate groups. The word reactive refers to remaining isocyanate (NCO) functionality.

7) An **"allophanate based intermediate polyisocyanate prepolymer"** or **"allophanate based prepolymer"** refers

in this invention to a polyisocyanate prepolymer comprising urethane groups and allophanate groups. The allophanate based polyisocyanate prepolymer is obtained by partly reacting the polyisocyanates with isocyanate reactive compounds to achieve urethane groups and further reacting the obtained urethane groups with polyisocyanates to form allophanate groups. The NCO value of the allophanate based polyisocyanate prepolymer in this invention is between 5 and 15%.

8) In the context of the present invention, the expression "NCO content" should be understood as the NCO value, which is defined as:

The isocyanate content (NCOv) (also referred to as percent NCO or NCO content) of all prepolymers, given in weight %, was measured by conventional NCO titration following the standard DIN 53185. In brief, isocyanate is reacted with an excess of di-n-butylamine to form urea. The unreacted amine is then titrated with standard nitric acid to the color change of bromocresol green indicator or to a potentiometric endpoint. The percent NCO or NCO-value is defined as the percent by weight of NCO-groups present in the product.

In the context of the present invention, the expression "NCO value" corresponds to an isocyanate value (also referred as isocyanate content or NCO content), which is the weight percentage of reactive isocyanate (NCO) groups in an isocyanate containing compound, modified isocyanate or prepolymer and is determined using the following equation, where the molecular weight of the NCO group is 42:

$$\text{Isocyanate value} = \%\ \text{NCO groups} = (42 \times \text{Functionality}) / (\text{Molecular weight}) \times 100.$$

DETAILED DESCRIPTION

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could.

The present invention relates to a method to prepare a reactive polyisocyanate composition (also referred to as a 1 component isocyanate prepolymer) which has an NCO value below 15 and contains not more than 1 wt% of monomeric starting di-isocyanate based on the weight of said polyisocyanate composition. Further the invention relates to a process for making the polyisocyanate composition and the intermediate allophanate based polyisocyanate prepolymers and polyol composition required to make the urethane group-containing polyisocyanate composition according to the invention. Furthermore, the invention relates to the use of the reactive polyisocyanate composition according to the invention in adhesive and coating applications.

According to a first aspect of the invention, a method to prepare a reactive polyisocyanate composition which contains not more than 1 wt% of monomeric (starting) di-isocyanate molecules based on the total weight of said polyisocyanate composition and having an NCO value in the range 0.1-15% is disclosed. Said reactive polyisocyanate composition is containing urethane groups and allophanate groups and has a ratio of allophanate groups over urethane groups larger than 0.05 and below 100.

According to embodiments the amount of monomeric starting di-isocyanate molecules in the reactive polyisocyanate composition of the invention is preferably below 0.5 wt%, most preferably below 0.1 wt% monomeric starting di-isocyanate molecules based on the total weight of said polyisocyanate composition.

According to embodiments, the NCO value in the reactive polyisocyanate composition of the invention is preferably in the range 0.8-2%, preferably in the range 1-2%, most preferably the NCO value is around 1%, for example the NCO value may be 0.9%, 1%, 1.1%, 1.2%.

According to embodiments, the ratio allophanate groups over urethane groups is below 100 and larger than 0.05, preferably larger than 0.1, preferably larger than 1.

According to the present invention, said method comprises mixing at least following compounds:

- An allophanate based polyisocyanate intermediate prepolymer containing ≥ 5 wt% and ≤ 20 wt% of monomeric starting di-isocyanate compounds based on the total weight of said prepolymer and having an NCO value in the

range 5-15%, and

- An isocyanate reactive composition containing isocyanate reactive compounds having a functionality between 1.8 and 10, and

Wherein the allophanate based polyisocyanate intermediate prepolymer is the reaction product of at least one polyisocyanate compound and an isocyanate reactive compound selected from a monool having a molecular weight in the range 32 -2000 g/mol, preferably 36-2000 g/mol and wherein the ratio of allophanate groups over the urethane groups is larger than 0.05, preferably in the range 1-100.

Preferably, the wt% of monomeric starting di-isocyanate is in the range 8-15 wt% based on the total weight of said prepolymer.

According to preferred embodiments, the allophanate based polyisocyanate intermediate prepolymer has an NCO value in the range 8-12%.

Allophanates are typically formed at elevated temperatures (higher than 100°C) or in the presence of special catalysts at lower temperatures by a reaction between urethane groups and isocyanate groups to form allophanate linkages:

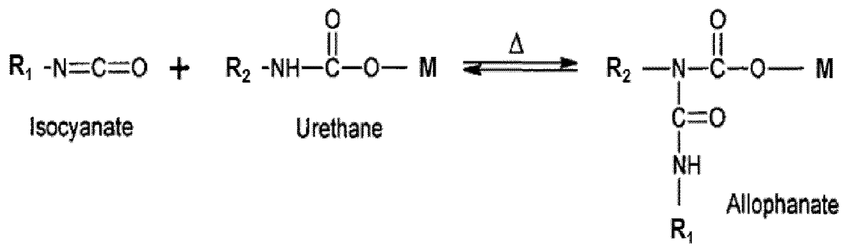


Wherein $R_1$ and $R_2$ represent a rest group or any other isocyanate molecule and M is representing in this invention a monool.

Suitable polyisocyanates comprise polyisocyanates of the type $R-(NCO)_x$ with x being at least 1 and R being an aromatic or aliphatic group, such as diphenylmethane, toluene, dicyclohexylmethane, hexamethylene, or a similar polyisocyanate. Preferably, said polyisocyanate comprises at least two isocyanate groups.

Non-limiting examples of suitable organic polyisocyanates which may be used in the present invention include aliphatic isocyanates such as hexamethylene diisocyanate; and aromatic isocyanates such as diphenylmethane diisocyanate (MDI), in the form of mixtures of its 2,4'-, 2,2'- and 4,4'-isomers and mixtures of diphenylmethane diisocyanates (MDI) and oligomers thereof, as well as polymeric methylene diphenyl diisocyanate (pMDI), m- and p-phenylene diisocyanate, tolylene-2,4- and tolylene-2,6-diisocyanate (also known as toluene diisocyanate, and referred to as TDI, such as 2,4 TDI and 2,6 TDI) in any suitable isomer mixture, chlorophenylene-2,4-diisocyanate, naphthylene-1,5-diisocyanate, diphenylene-4,4'-diisocyanate, 4,4'-diisocyanate-3,3'-dimethyl-diphenyl, 3-methyl-diphenylmethane-4,4'-diisocyanate and diphenyl ether diisocyanate; and cycloaliphatic diisocyanates such as cyclohexane-2,4- and -2,3-diisocyanate, 1-methylcyclohexyl-2,4- and -2,6-diisocyanate and mixtures thereof and bis-(isocyanatocyclohexyl)methane (e.g. 4,4'-diisocyanatodicyclohexylmethane (H12MDI)), triisocyanates such as 2,4,6-triisocyanatotoluene and 2,4,4-triisocyanatodiphenylether, isophorone diisocyanate (IPDI), butylene diisocyanate, trimethylhexamethylene diisocyanate, isocyanatomethyl-1,8-octane diisocyanate, tetramethylxylene diisocyanate (TMXDI), 1,4-cyclohexanediisocyanate (CDI), and tolidine diisocyanate (TODI); any suitable mixture of these polyisocyanates.

Suitable catalysts for initiating the formation of allophanates are for example Zn-neodecanoate, commercially available as Valikat® Zn1910 from Umicore and alkylacetoacetate based catalysts such as Zn-acetylacetonate or any suitable catalyst capable of forming allophanate linkages in polyisocyanates.

Catalyst deactivators to be used in the invention include acidic materials such as thionyl chloride. Generally, catalyst stoppers are added in a ratio of at least 1 equivalent of deactivator to each mole of the allophanate catalyst, e.g. Zn-acetylacetonate.

According to embodiments, the monools suitable for making the allophanate based polyisocyanate intermediate prepolymer of the invention may be selected from polyoxyalkylene polyether monools which may be prepared by the simple addition of one or more alkylene oxides to an initiator fatty hydrocarbon having one alkylene oxide active hydrogen represented by the general formula R-X where R represents a C8-C24 branched or unbranched, saturated or ethylenically unsaturated, aliphatic or alicyclic radical; preferably an aliphatic linear, saturated or ethylenically unsaturated radical; more preferably a linear alkyl (saturated) radical, and most preferably a linear C12-C15 alkyl radical; and X represents OH, NRH, or SH, preferably OH.

According to embodiments, the monools suitable for making the allophanate based polyisocyanate intermediate prepolymer of the invention may be selected from methanol, ethanol, propanol, butanol, phenol, cyclohexanol and

hydrocarbon monools having an average molecular weight in the range 32-2000 g/mol, preferably 36-2000 g/mol, more preferably 32-1000 g/mol, even more preferably 100-1000 g/mol, and advantageously 250-750 g/mol, such as aliphatic monools, polyether monools, polyester monools and modified castor oil monools. A preferred example of a suitable polyether monool is poly(ethylene glycol) methyl ether.

According to embodiments, the polyisocyanate compounds used in the urethane group-containing polyisocyanate composition according to the present invention are selected from organic isocyanates containing a plurality of isocyanate groups including aliphatic, cycloaliphatic and/or araliphatic polyisocyanates, preferably diphenylmethane diisocyanate (MDI) based polyisocyanates, preferably diphenylmethane diisocyanate (MDI) based polyisocyanates having < 50 wt% 2,4 MDI, most preferably diphenylmethane diisocyanate (MDI) based polyisocyanates having < 40 wt% 2,4 MDI calculated on the total weight of the organic polyisocyanate mixture. Advantageously, it has been observed that using diphenylmethane diisocyanate (MDI) based polyisocyanates containing 2,4 MDI at a content ranging from 10 to 40 wt% is preferred, based on the total weight of the organic polyisocyanate mixture.

Methylene bridged polyphenyl polyisocyanates (e.g. Methylene diphenyl diisocyanate, abbreviated as MDI) are well known in the art and have the generic formula I wherein n is one or more and in the case of the crude mixtures represents an average of more than one. They are prepared by phosgenation of corresponding mixtures of polyamines obtained by condensation of aniline and formaldehyde.

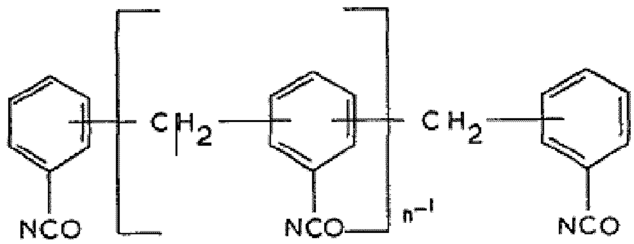

(I)

According to embodiments, the isocyanate reactive compounds used to react with the allophanate intermediate prepolymer (in order to make the urethane group-containing polyisocyanate composition according to the present invention) have a functionality between 1 and 10, preferably between preferably 2 to 4.

According to embodiments, the isocyanate reactive compounds used to react with the allophanate intermediate prepolymer have an average molecular weight in the range 100-10000 g/mol, preferably 500-5000 g/mol.

According to embodiments, the isocyanate reactive compounds used to react with the allophanate intermediate prepolymer (in order to make the urethane group-containing polyisocyanate composition according to the present invention) are selected from the group comprising polyethers, polyesters, acrylic polyols, polycarbonates, castor oil and modified castor oils, polybutadienes, polyolefines. Examples of suitable isocyanate reactive compounds are polyester polyols such as Hoopol® F1390 or Hoopol® F931 (polyester polyols from Synthesia).

According to a second aspect of the invention, an allophanate based polyisocyanate intermediate prepolymer suitable for making the reactive polyisocyanate composition according to the present invention is disclosed. Said allophanate based polyisocyanate intermediate prepolymer is the reaction product of at least one polyisocyanate compound and at least one isocyanate reactive compound selected from a monool having a molecular weight in the range 32-2000 g/mol, preferably 36-2000 g/mol, more preferably 32-1000 g/mol, even more preferably 100-1000 g/mol, and advantageously 250-750 g/mol and having following characteristics:

- Containing ≥ 5 wt% and ≤ 20 wt%, more preferably ≥ 8 wt% and ≤ 15 wt% monomeric di-isocyanate compounds based on the total weight of said prepolymer, and
- Having an NCO value in the range 5-15%, preferably in the range 8-12%, and
- Having a ratio of allophanate groups over urethane groups higher than 0.05, preferably in the range 1-100.

The allophanate based polyisocyanate intermediate prepolymer is made by at least one polyisocyanate compound and at least one isocyanate reactive compound selected from a monool thereby using a specific allophanate forming catalyst at temperatures (cook temperature) below 120°C, preferably < 110°C and most preferred < 100°C.

According to a third aspect, the use of the reactive polyisocyanate composition of the present invention is disclosed (also referred to commercially as 1 component PU systems) for making sealants, coatings, adhesives.

According to embodiments, the urethane group-containing polyisocyanate composition of the present invention may be applied by means of spraying after the required ingredients were mixed at the departure point from a spray nozzle, by dispensing, by roller or by brush application.

The invention is now illustrated with below reference to the examples.

EXAMPLES

Chemicals used:

- Hoopol® F-931: Polyester polyol from Synthesia (OH value: 37-40 mgKOH/g)
- Suprasec® 1306 from Huntsman (pure 4,4' MDI, NCO value 33.6%)
- Suprasec® 2008 from Huntsman (prepolymer from MDI and polyether polyol, NCO value 10.2%)
- Suprasec® 3030 from Huntsman (mix from 60-65% 4,4' MDI and 35-40% 2.4 MDI, NCO value 33.6%)
- Daltocel® XF460 from Huntsman (polyether polyol, Mw~ 4000, OHv 30, f 1.8, PO-EO tipped)
- MPEG500 from Ineos, Poly(ethylene glycol) methyl ether with average molecular weight of 500 g/mol used as monool
- Valikat® Zn1910 from Umicore, zinc neodecanoate: an allophanate initiating catalyst
- Zn-acetylacetonate from Aldrich, an allophanate initiating catalyst
- Thionyl chloride from Aldrich, a catalyst deactivator.

The NCO content of all prepolymers was determined by titration according to DIN 53185. The MDI monomeric content (di-isocyanate) was determined by GPC (determination di-isocyanate) combined with GC-MS (correction 4,4'/2,4'). The degree of allophanation was determined by 13C NMR.

In the following examples, the urethane group-containing polyisocyanate composition is referred to as a reactive hot melt composition (RHM). The reactive hot melt composition made according to the invention are resulting in compositions having < 1.0 wt% monomeric di-isocyanate.

1) Comparative example: reactive hot melt (RHM) based on pure MDI

Suprasec® 1306 (pure MDI) was prepolymerised with Hoopol® F931 to an NCO value of 3.0%.

85.6 g Hoopol® F931 was dried under vacuum at 100°C and after cooling to 80°C, weighted into a reaction flask under nitrogen atmosphere. 14.4 g Suprasec® 1306 was added while blanketing with nitrogen and stirring vigorously. Temperature was maintained for 1.5 hours until a NCO value of 3.0% was reached with a monomeric di-isocyanate content of 4.6%.

Conclusion: the RHM based on pure MDI (100% di-isocyanate) did not enable to achieve a monomeric di-isocyanate content < 1.0%.

2) Comparative example: reactive hot melt (RHM) based on Suprasec® 2008

Suprasec® 2008 (a prepolymer from MDI and polyether polyol, NCO value 10.2%; viscosity of 1700 mPa.s at 25°C) was prepolymerised with Hoopol® F931 (commercial polyester polyol) to NCO value of 3.0%.

42.5 g Hoopol® F931 was dried under vacuum at 100°C and after cooling to 80°C, weighted into a reaction flask under nitrogen atmosphere. 57.5 g Suprasec® 2008 was added while blanketing with nitrogen and stirring vigorously. Temperature was maintained for 1.5 hours until a NCO content of 3.0% was reached with a monomeric di-isocyanate content of 4.1%.

Conclusion: the RHM based on a state of the art prepolymer with NCO value 10.2% (~ 26% di-isocyanate) did not enable to achieve a monomeric di-isocyanate content < 1%.

3) Example of the invention: reactive hot melt (RHM) based on an allophanate based polyisocyanate intermediate prepolymer

The allophanate intermediate is a prepolymer based on MDI and a monool (NCO value = 10.7%; monomeric di-isocyanate content = 15.9%; viscosity = 2200 mPa.s at 25°C; degree of allophanation: allophanate/urethane ratio = 6.9) using Zn AcAc as allophanate initiating catalyst and thionyl chloride as deactivator.

This allophanate intermediate prepolymer was further polymerised with Hoopol® F931 (commercial polyester polyol) to NCO value of 1.5%.

71.0 g Hoopol® F931 was dried under vacuum at 100°C and after cooling to 80°C, weighted into a reaction flask under nitrogen atmosphere. 29.0 g of the allophanate was added while blanketing with nitrogen and stirring vigorously. Temperature was maintained for 1.5 hours until a NCO content of 1.5% was reached with a monomeric di-isocyanate content of 0.4%.

Conclusion: the RHM based on an allophanate based prepolymer with NCO value 10.7% (~ 15.9% di-isocyanate) enabled to achieve a monomeric di-isocyanate content < 1.0%.

4) Example of the invention: reactive hot melt (RHM) based on an allophanate based polyisocyanate intermediate prepolymer

The allophanate intermediate is a prepolymer based on MDI and a monool (NCO value = 10.7%; monomeric di-isocyanate content = 15.9%; viscosity = 2200 mPa.s at 25°C; degree of allophanation: allophanate/urethane ratio = 6.9) using Zn AcAc as allophanate initiating catalyst and thionyl chloride as deactivator.

This allophanate intermediate prepolymer was further polymerised with Hoopol® F931 (commercial polyester polyol) to NCO value of 1.0%.

75.5 g Hoopol® F931 was dried under vacuum at 100°C and after cooling to 80°C, weighted into a reaction flask under nitrogen atmosphere. 24.5 g of the allophanate was added while blanketing with nitrogen and stirring vigorously. Temperature was maintained for 1.5 hours until a NCO content of 1.0% was reached with a monomeric di-isocyanate content < 0.1%.

Conclusion: the RHM based on an allophanate based prepolymer with NCO value 10.7% (~ 15.9% di-isocyanate) enabled to achieve a monomeric di-isocyanate content < 0.1%.

5) Example of the invention: reactive hot melt (RHM) based on an allophanate based polyisocyanate intermediate prepolymer

The allophanate intermediate is a prepolymer based on MDI and a monool (NCO value = 9.5%; monomeric di-isocyanate content = 10.4%; viscosity = 2040 mPa.s at 25°C; degree of allophanation: allophanate/urethane ratio = 1.9) using Zn AcAc as allophanate initiating catalyst and thionyl chloride as deactivator.

This allophanate intermediate prepolymer was further polymerised with Hoopol® F931 (commercial polyester polyol) to NCO value of 1.0%.

72.3 g Hoopol® F931 was dried under vacuum at 100°C and after cooling to 80°C, weighted into a reaction flask under nitrogen atmosphere. 27.7 g of the allophanate was added while blanketing with nitrogen and stirring vigorously. Temperature was maintained for 1.5 hours until a NCO content of 1.0% was reached with a monomeric di-isocyanate content < 0.1%.

Conclusion: the RHM based on an allophanate based prepolymer with NCO value 9.5% (~ 10.4% di-isocyanate) enabled to achieve a monomeric di-isocyanate content < 0.1%.

## Claims

1. A method to prepare a reactive polyisocyanate composition which contains not more than 1 wt% of monomeric starting di-isocyanate based on the total weight of said polyisocyanate composition and, determined according to the method identified in the description, having an NCO value in the range 0.1-15%, and wherein said composition comprises urethane groups and allophanate groups and wherein the ratio of allophanate groups over urethane groups is between 0.05 and 100, determined according to the methods identified in the description, said method comprising mixing at least following compounds:

    - An allophanate based polyisocyanate intermediate prepolymer containing ≥ 5 wt% and ≤ 20 wt% of monomeric di-isocyanate compounds based on the total weight of said prepolymer and having an NCO value in the range 5-15%, and
    - An isocyanate reactive composition containing isocyanate reactive compounds having a functionality between 1 and 10 and a molecular weight in the range 100-10000, and

    Wherein the allophanate based polyisocyanate intermediate prepolymer is the reaction product of at least one polyisocyanate compound and an isocyanate reactive compound selected from a monool having a molecular weight in the range 32-2000 g/mol, preferably 36-2000 g/mol, wherein the ratio of allophanate groups over the urethane groups is higher than 0.05.

2. The method according to claim 1 wherein the ratio of allophanate groups over the urethane groups in the allophanate based polyisocyanate intermediate prepolymer is in the range 1-100.

3. The method according to claim 1 or 2 wherein the allophanate based polyisocyanate intermediate prepolymer has an NCO value in the range 8-12%.

4. The method according to any of claim 1-3 wherein the monools are selected from polyoxyalkylene polyether monools,

polyester monools and modified castor oil monools, having an average molecular weight of 32-1000 g/mol, preferably 100-1000 g/mol, more preferably 250-750 g/mol.

**5.** The method according to any of claim 1-4 wherein the polyisocyanate compounds used to make the polyisocyanate intermediate prepolymer are selected from diphenylmethane diisocyanate (MDI) based polyisocyanates having < 40 wt% 2,4 MDI, preferably ranging from 10 to 40 wt% 2,4 MDI, calculated on the total weight of the organic polyisocyanate mixture.

**6.** The method according to any of claim 1-5 wherein the isocyanate reactive compounds used to react with the allophanate intermediate prepolymer is having a functionality between 1.8 and 10, preferably between preferably 2 to 4.

**7.** The method according to any of claim 1-6 wherein the isocyanate reactive compounds used to react with the allophanate intermediate prepolymer are selected from the group comprising polyethers, polyesters, acrylic polyols, castor oil and modified castor oils, polybutadiene, polyolefin, preferably selected from polyester polyols.

**8.** An allophanate based polyisocyanate intermediate prepolymer suitable for making a reactive polyisocyanate composition which contains not more than 1 wt% of monomeric starting di-isocyanate based on the total weight of said polyisocyanate composition and, determined according to the method identified in the description, having an NCO value in the range 0.1-15%, and wherein said composition comprises urethane groups and allophanate groups and wherein the ratio of allophanate groups over urethane groups is between 0.05 and 100, determined according to the methods identified in the description, wherein said intermediate prepolymer is the reaction product of at least one polyisocyanate compound and at least one isocyanate reactive compound selected from a monool having a molecular weight in the range 32-2000 g/mol, preferably 36-2000 g/mol and having following characteristics:

- Containing ≥ 5 wt% and ≤ 20 wt% monomeric di-isocyanate compounds based on the total weight of said prepolymer, and
- Having an NCO value in the range 5-15%, preferably in the range 8-12%, and
- Having a ratio of allophanate groups over urethane groups higher than 0.05 and preferably in the range 1-100.

**9.** The use of the reactive polyisocyanate composition obtained by the method according to any of claims 1 to 7 for making sealants, coatings, adhesives and elastomers.

## Patentansprüche

**1.** Verfahren zur Herstellung einer reaktiven Polyisocyanat-Zusammensetzung, die nicht mehr als 1 Gew.-% monomeres Ausgangs-Diisocyanat enthält, bezogen auf das Gesamtgewicht besagter Polyisocyanat-Zusammensetzung und bestimmt gemäß dem Verfahren, das in der Beschreibung identifiziert ist, mit einem NCO-Wert im Bereich 0,1 - 15%, und wobei besagte Zusammensetzung Urethangruppen und Allophanatgruppen umfasst und wobei das Verhältnis von Allophanatgruppen gegenüber Urethangruppen zwischen 0,05 und 100 liegt, bestimmt gemäß den Verfahren, die in der Beschreibung identifiziert sind, wobei besagtes Verfahren das Mischen wenigstens folgender Komponenten umfasst:

- ein allophanatbasiertes Polyisocyanat-Zwischenpräpolymer, enthaltend ≥ 5 Gew.-% und ≤ 20 Gew.-% von monomeren Diisocyanat-Verbindungen, bezogen auf das Gesamtgewicht besagten Präpolymers, und mit einem NCO-Wert im Bereich 5 - 15% und
- eine isocyanatreaktive Zusammensetzung, enthaltend isocyanatreaktive Verbindungen, mit einer Funktionalität zwischen 1 und 10 und einem Molekulargewicht im Bereich 100 - 10.000 und

wobei das allophanatbasierte Polyisocyanat-Zwischenpräpolymer das Reaktionsprodukt aus wenigstens einer Polyisocyanat-Verbindung und einer isocyanatreaktiven Verbindung ist, ausgewählt aus einem Monool mit einem Molekulargewicht im Bereich 32 - 2.000 g/mol, vorzugsweise 36 - 2.000 g/mol, wobei das Verhältnis von Allophanatgruppen gegenüber Urethangruppen höher als 0,05 ist.

**2.** Verfahren nach Anspruch 1, wobei das Verhältnis von Allophanatgruppen gegenüber Urethangruppen im allophanatbasierten Polyisocyanat-Zwischenpräpolymer im Bereich 1 - 100 liegt.

**3.** Verfahren nach Anspruch 1 oder 2, wobei das allophanatbasierte Polyisocyanat-Zwischenpräpolymer einen NCO-Wert im Bereich 8 - 12% besitzt.

**4.** Verfahren nach einem der Ansprüche 1 - 3, wobei die Monoole ausgewählt sind aus Polyoxyalkylenpolyethermonoolen, Polyestermonoolen und modifizierten Kastorölmonoolen, mit einem durchschnittlichen Molekulargewicht von 32 - 1.000 g/mol, vorzugsweise 100 - 1.000 g/mol, bevorzugter 250 - 750 g/mol.

**5.** Verfahren nach einem der Ansprüche 1 - 4, wobei die Polyisocyanat-Verbindungen, die verwendet werden, um das Polyisocyanat-Zwischenpräpolymer herzustellen, ausgewählt sind aus Diphenylmethandiisocyanat(MDI)-basierten Polyisocyanaten mit < 40 Gew.-% 2,4-MDI, vorzugsweise im Bereich von 10 bis 40 Gew.-% 2,4-MDI, berechnet auf das Gesamtgewicht der organischen Polyisocyanat-Mischung.

**6.** Verfahren nach einem der Ansprüche 1 - 5, wobei die isocyanatreaktiven Verbindungen, die verwendet werden, um mit dem Allophanat-Zwischenpräpolymer zu reagieren, eine Funktionalität zwischen 1,8 und 10, vorzugsweise zwischen vorzugsweise 2 bis 4 aufweisen.

**7.** Verfahren nach einem der Ansprüche 1 - 6, wobei die isocyanatreaktiven Verbindungen, die verwendet werden, um mit dem Allophanat-Zwischenpräpolymer zu reagieren, ausgewählt sind aus der Gruppe umfassend Polyether, Polyester, Acrylpolyole, Kastoröl und modifizierte Kastoröle, Polybutadien, Polyolefin, vorzugsweise ausgewählt aus Polyesterpolyolen.

**8.** Allophanatbasiertes Polyisocyanat-Zwischenpräpolymer, das geeignet ist zur Herstellung einer reaktiven Polyisocyanat-Zusammensetzung, die nicht mehr als 1 Gew.-% monomeres Ausgangs-Diisocyanat enthält, bezogen auf das Gesamtgewicht besagter Polyisocyanat-Zusammensetzung und bestimmt gemäß dem Verfahren, das in der Beschreibung identifiziert ist, mit einem NCO-Wert im Bereich 0,1 - 15%, und wobei besagte Zusammensetzung Urethangruppen und Allophanatgruppen umfasst und wobei das Verhältnis von Allophanatgruppen gegenüber Urethangruppen zwischen 0,05 und 100 liegt, bestimmt gemäß den Verfahren, die in der Beschreibung identifiziert sind, wobei besagtes Zwischenpräpolymer das Reaktionsprodukt aus wenigstens einer Polyisocyanat-Verbindung und wenigstens einer isocyanatreaktiven Verbindung ist, ausgewählt aus einem Monool mit einem Molekulargewicht im Bereich 32 - 2.000 g/mol, vorzugsweise 36 - 2.000 g/mol, und mit folgenden Eigenschaften:

- enthaltend ≥ 5 Gew.-% und ≤ 20 Gew.-% monomere Diisocyanat-Verbindungen, bezogen auf das Gesamtgewicht besagten Präpolymers, und
- mit einem NCO-Wert im Bereich 5 - 15%, vorzugsweise im Bereich 8 - 12% und
- mit einem Verhältnis von Allophanatgruppen gegenüber Urethangruppen von mehr als 0,05 und vorzugsweise im Bereich 1 - 100.

**9.** Verwendung der reaktiven Polyisocyanat-Zusammensetzung, erhalten mit dem Verfahren gemäß einem der Ansprüche 1 bis 7, zur Herstellung von Dichtungsmitteln, Beschichtungen, Klebstoffen und Elastomeren.

## Revendications

**1.** Procédé de préparation d'une composition de polyisocyanate réactif qui ne contient pas plus de 1 % en poids de di-isocyanate de départ monomère sur la base du poids total de ladite composition de polyisocyanate, et présentant, déterminée selon le procédé identifié dans la description, une valeur NCO comprise entre 0,1 et 15 %, et ladite composition comprenant des groupes uréthane et des groupes allophanate, et le rapport des groupes allophanate aux groupes uréthane étant compris entre 0,05 et 100, déterminé selon les procédés identifiés dans la description,

ledit procédé comprenant le mélange d'au moins les composés suivants :

- un prépolymère intermédiaire de polyisocyanate à base d'allophanate contenant entre ≥ 5 % en poids et ≤ 20 % en poids de composés de di-isocyanate monomère sur la base du poids total dudit prépolymère, et présentant une valeur NCO comprise entre 5 et 15 %, et
- une composition réactive à l'isocyanate contenant des composés réactifs à l'isocyanate présentant une fonctionnalité entre 1 et 10 et un poids moléculaire compris entre 100 et 10000, et

dans lequel le prépolymère intermédiaire de polyisocyanate à base d'allophanate est le produit de réaction d'au

moins un composé de polyisocyanate et d'un composé réactif à l'isocyanate choisi parmi un monool à poids moléculaire compris entre 32 et 2000 g/mol, de préférence entre 36 et 2000 g/mol, le rapport des groupes allophanate aux groupes uréthane étant supérieur à 0,05.

**2.** Le procédé selon la revendication 1, dans lequel le rapport des groupes allophanate aux groupes uréthane, dans le prépolymère intermédiaire de polyisocyanate à base d'allophanate, est compris entre 1 et 100.

**3.** Le procédé selon les revendications 1 ou 2, dans lequel le prépolymère intermédiaire de polyisocyanate à base d'allophanate présente une valeur NCO comprise entre 8 et 12 %.

**4.** Le procédé selon l'une quelconque des revendications 1-3, dans lequel les monools sont choisis parmi des monools de polyéther de polyoxyalkylène, des monools de polyester et des monools d'huile de ricin modifiée, à poids moléculaire moyen compris entre 32 et 1000 g/mol, de préférence entre 100 et 1000 g/mol, et de préférence encore entre 250 et 750 g/mol.

**5.** Le procédé selon l'une quelconque des revendications 1-4, dans lequel les composés de polyisocyanate utilisés pour préparer le prépolymère intermédiaire de polyisocyanate sont choisis parmi des polyisocyanates à base de di-isocyanate de diphénylméthane (MDI) comportant < 40 % en poids de 2,4 MDI, de préférence entre 10 et 40 % en poids de 2,4 MDI, calculé sur le poids total du mélange de polyisocyanate organique.

**6.** Le procédé selon l'une quelconque des revendications 1-5, dans lequel les composés réactifs à l'isocyanate, utilisés pour réagir avec le prépolymère intermédiaire d'allophanate, présentent une fonctionnalité entre 1,8 et 10, de préférence entre 2 et 4.

**7.** Le procédé selon l'une quelconque des revendications 1-6, dans lequel les composés réactifs à l'isocyanate, utilisés pour réagir avec le prépolymère intermédiaire d'allophanate, sont choisis dans le groupe constitué par des polyéthers, des polyesters, des polyols acryliques, de l'huile de ricin et des huiles de ricin modifiées, le polybutadiène, une polyoléfine, et choisis de préférence parmi des polyols de polyester.

**8.** Prépolymère intermédiaire de polyisocyanate à base d'allophanate adapté à préparer une composition de polyisocyanate réactif qui ne contient pas plus de 1 % en poids de di-isocyanate de départ monomère sur la base du poids total de ladite composition de polyisocyanate, et présentant, déterminée selon le procédé identifié dans la description, une valeur NCO comprise entre 0,1 et 15 %, et ladite composition comprenant des groupes uréthane et des groupes allophanate, et le rapport des groupes allophanate aux groupes uréthane étant compris entre 0,05 et 100, déterminé selon les procédés identifiés dans la description, ledit prépolymère intermédiaire étant le produit de réaction d'au moins un composé de polyisocyanate et d'au moins un composé réactif à l'isocyanate choisi parmi un monool à poids moléculaire compris entre 32 et 2000 g/mol, de préférence entre 36 et 2000 g/mol, et comportant les caractéristiques suivantes :

- un contenu entre ≥ 5 % en poids et ≤ 20 % en poids de composés de di-isocyanate monomère sur la base du poids total dudit prépolymère, et
- une valeur NCO comprise entre 5 et 15 %, de préférence entre 8 et 12 %, et
- un rapport des groupes allophanate aux groupes uréthane supérieur à 0,05, et de préférence compris entre 1 et 100.

**9.** Utilisation de la composition de polyisocyanate réactif obtenue par le procédé selon l'une quelconque des revendications 1 à 7, pour préparer des matériaux d'étanchéité, des revêtements, des adhésifs et des élastomères.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0316738 A
- US 5441808 A
- EP 1086969 A1
- US 6426414 B1
- US 6410095 B1
- US 20110263797 A1
- WO 0300652 A1
- US 20060079661 A1
- US 5880167 A1
- EP 1245601 A1
- EP 1247825 A1


### Non-patent literature cited in the description


- **FRISCH et al.** *Advance in Urethane Science and Techn.,* 1971, vol. 1-7